Europäisches Patentamt

(19) European Patent Office

Office européen des brevets

(11) Veröffentlichungsnummer: **0 118 656**
**B1**

(12) **EUROPÄISCHE PATENTSCHRIFT**

(45) Veröffentlichungstag der Patentschrift:
**11.06.86**

(21) Anmeldenummer: **84100021.9**

(22) Anmeldetag: **03.01.84**

(51) Int. Cl.⁴: **F 16 L  47/04,** F 16 L  47/00,
F 16 L  19/08

(54) **Kupplungsvorrichtung für das druckdichte und lösbare Verbinden von Rohren aus nachgiebigem Werkstoff.**

(30) Priorität: **04.03.83  DE 8306170 U**

(43) Veröffentlichungstag der Anmeldung:
**19.09.84 Patentblatt 84/38**

(45) Bekanntmachung des Hinweises auf die Patenterteilung:
**11.06.86 Patentblatt 86/24**

(84) Benannte Vertragsstaaten:
**AT CH DE IT LI NL**

(56) Entgegenhaltungen:
**EP - A - 0 046 705**
**CH - A - 545 937**
**FR - A - 2 296 138**
**FR - A - 2 452 050**
**US - A - 3 809 413**

(73) Patentinhaber: **Firma Franz Viegener II, Ennester Weg 9,
D-5952 Attendorn (DE)**

(72) Erfinder: **Viegener, Walter, Ennester Weg 9,
D-5952 Attendorn (DE)**

(74) Vertreter: **Stracke, Alexander, Dipl.-Ing. et al,
Patentanwälte Dipl.-Ing. Loesenbeck Dipl.-Ing. Stracke
Jöllenbecker Strasse 164 Postfach 5605,
D-4800 Bielefeld 1 (DE)**

## Beschreibung

Die Erfindung bezieht sich auf eine Kupplungsvorrichtung für das druckdichte und lösbare Verbinden von Rohren aus nachgiebigem Werkstoff, insbesondere von Kunststoffrohren, wobei in einem Grundkörper eine Aufnahme für ein Rohrende vorgesehen ist, das Rohrende benachbart der äußeren Stirnfläche mit Abstand von einer Anlagefläche umschlossen ist, an der sich ein an dem Außenmantel des Rohrendes, anliegender Dichtungsring abstützt, dem an der der Anlagefläche abgewandten Seite eine Gleitscheibe und ein geschlitzter, am Außenmantel des Rohrendes sich abstützender Spannring zugeordnet sind, wobei der Spannring außen mit einer Keilfläche versehen ist, die sich an einer konischen Innenfläche eines ringförmigen, in den Innenraum des Grundkörpers einschraubbaren Schraubteiles abstützt, wobei sich der Innenkonus des Schraubteiles vom Einschraubende bis zu dem der äußeren Stirnfläche des Rohrendes zugewandten Ende hin erweitert.

Eine derartige Kupplungsvorrichtung ist beispielsweise aus der FR-A- 2 452 050 bekannt. Dabei wird eine über das Schraubteil auf den Dichtungsring aufzubringende Kraft, die diesen sowohl an das Rohrende als auch an den Ringkörper anpreßt, senkrecht aufgebracht, so daß sich zwangsläufig eine ungünstige Kraftverteilung ergibt, die sich insofern nachteilig auf die Dichtigkeit dieser Kupplungsvorrichtung auswirkt, als sich beim Anziehen des Einschraubteiles der Klemmring sofort in die Rohroberfläche eindrückt, so daß nachfolgend eine weitere Dichtkraft auf die Dichtung nicht mehr aufgebracht werden kann.

Durch diese nicht ausreichende zusätzliche Verspannung des Dichtungsringes besteht die Gefahr, daß die bekannte Kupplungsvorrichtung bei Unterdruck oder niedrigem Druck des durch das Rohr geführten Mediums sowie bei leichter Unrundheit und leichter Oberflächenbeschädigung des Rohres undicht wird.

Der Erfindung liegt die Aufgabe zugrunde, eine Kupplungsvorrichtung der gattungsgemäßen Art so zu gestalten, daß das Rohrende mit einfachen Mitteln druckdicht und kraftschlüssig verspannt werden kann, wobei leichte Unrundheiten und leichte Beschädigungen des Rohres ausgeglichen werden.

Diese Aufgabe wird nach der Erfindung dadurch gelöst, daß die AnlageflächeTeil eines das Rohrende umschließenden Ringkörpers (6) ist und daß der Dichtungsring außen an der konischen Innenfläche des Schraubteiles anliegt und das Schraubteil an dem in den Grundkörper eingeführten Ende eine äußere zylindrische Führungsfläche aufweist, in deren Bereich eine nach außen geöffnete Aufnahmenut für eine sich an der zylindrischen Innenfläche des Grundkörpers abstützende Dichtung vorgesehen ist.

Der Dichtungsring und der Spannring werden so dimensioniert, daß zunächst der Dichtungsring, der als O-Ring ausgebildet sein kann, und dann der Dichtungsring und der Spannring zusammen beim Einschrauben des mit dem Innenkonus versehenen Schraubteils verspannt werden.

Der Anlagering kann an seiner der Anlagefläche gegenüberliegenden Seite mit Rastfedern ausgerüstet sein, deren Rastnasen in eine nach innen geöffnete Nut des Grundkörpers eingreifen.

Es ist vorteilhaft, die Gleitscheibe an einer Stelle mit dem Spannring zu verbinden. Durch diese Verbindung wird die Lage der Gleitscheibe aegenüber dem Spannring fixiert, und es werden die Montage der Teile der Vorrichtung sowie das Einführen des Rohrendes erleichtert.

Weitere Merkmale der Kupplungsvorrichtung nach der Neuerung ergeben sich aus den Unteransprüchen und der folgenden Beschreibung einer vorteilhaften, beispielsweisen Ausführungsform.

Es zeigen:

Fig. 1 die Kupplungsvorrichtung im Schnitt mit eingesetztem Rohrende, wobei auf der rechten Seite die Funktionsteile in der Ausgangslage und auf der linken Seite die Funktionsteile in der verspannten Lage aufgezeigt sind, und

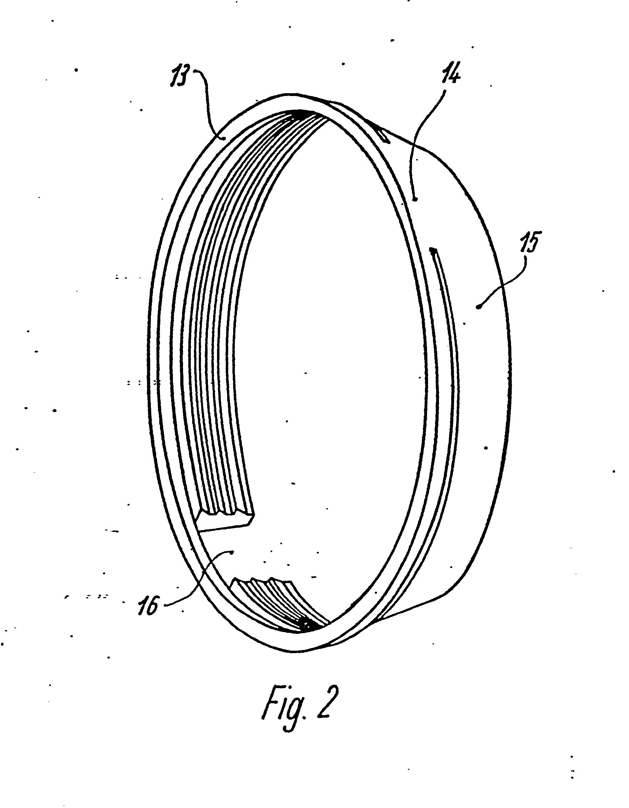

Fig. 2 die Gleitacheibe und den damit verbundenen, geschlitzten Spannring in perspektivischer Darstellung.

Die Kupplungsvorrichtung 1 weist einen Grundkörper 2 auf, der eine Aufnahme für ein Rohrende 3 bildet. Das Rohtende eines aus nachgiebigem Werkstoff, insbesondere aus Kunststoff, gefertigten Rohres ist im Bereich der äuneren Stirnfläche 4 rechtwinklig zuqeschnitten und liegt nach dem Einsetzen des Rohrendes in dem Grundkörper an einer Anschlagfläche 5 an.

Das Rohrende 3 wird mit Abstand von einem Anlagering 6 umschlossen, wobei der Spalt zwischen dem Anlagering und dem Rohrende auch nach der Verspannung des Rohrendes in dem Grundkörper vorhanden ist.

In dem dargestellten Ausführungsbeispiel ist der Anlägering 6 aus Kunststoff gefertigt und weist am vorderen Ende Rastfedern 7 auf, die mit ihren Rastnasen 8 in eine nach innen geöffnete Nut 9 des Grundkörpers 2 eingreifen.

An dem Anlagering 6 liegt ein Dichtungsring 10 aus elastischem Material an, der in dem Ausführungsbeispiel als O-Ring ausgebildet ist. Dieser Dichtungsring 10 stützt sich auch im Bereich seines Außenrandes an einer konischen Innenfläche 11 eines ringförmigen Schraubteils 12 ab.

An der dem Anlagering 6 abgewandten Seite ist dem Dichtungsring 10 eine Gleitscheibe 13 zugeordnet, die an einer Stelle 14 mit einem Spannring 15 verbunden bzw. einstückig ist. Der Spannring ist geteilt und weist einen Schlitz 16 auf.

Der Spannring 15 ist außen mit einer Keilfläche 17 versehen, die mit der konischen Innenfläche 11 des Schraubteils 12 zusammenwirkt.

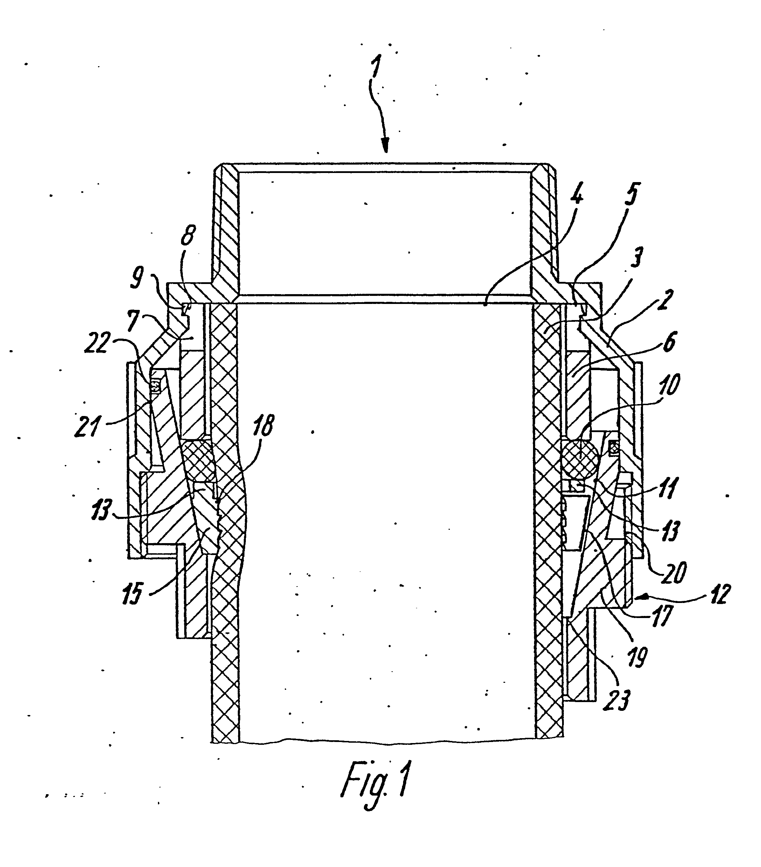

Der geschlitzte Spannring 15 weist an seiner Innenfläche Verankerungsrippen 18 auf, die sich, wie die fig. 1 auf der linken Seite zeigt, beim Verspannen des Spannringes 15 in das Material des Rohrendes 3 eingraben.

Die Funktion der Gleitscheibe 13 besteht darin, eine Zerstörung oder Beschädigung des Dichtungsringes im Bereich des Schlitzes 16 des Spannringes 15 zu verhindern und dafür zu sorgen, daß der Dichtungsring eine gleichmäßige Kraftabtragung auf seinem gesamten Umfang beim Verspannen erhält.

Das Schraubteil 12 weist etwa mittig einen Flanschring 19 auf, der mit einem Außengewinde versehen ist, das in ein Innengewinde 20 des Grundkörpers eingreift.

An dem in den Grundkörper eingeführten Ende ist das Schraubteil 12 mit einer zylindrischen Außenfläche 21 ausgerüstet, in deren Bereich eine nach außen geöffnete Aufnahmenut für eine sich an der zylindrischen Innenfläche des Grundkörpers 2 abstützende Dichtung 22 vorgesehen ist.

Der Innenkonus des Schraubteils 12 erweitert sich vom Einschraubende zur äußeren Stirnfläche 4 des Rohrendes hin. Im Bereich des kleinsten Durchmessers wird der Innenkonus durch eine Anlagefläche 23 für den Spannring begrenzt.

Beim Einschrauben des Schraubteils 12 wird zunächst der Dichtungsring 10 und anschließend der Dichtungsring und der Spannring 15 verformt, bis sie die in der Fig. 1 auf der linken Seite dargestellte Lage einnehmen.

Die druckdichte Verspannung des Rohrendes im Grundkörper kann in einfacher Weise durch Herausschrauben des Schraubteils 12 aus dem Grundkörper wieder gelöst werden.

### Bezugszeichenliste

1 Kupplungsvorrichtung
2 Grundkörper
3 Rohrende
4 Stirnfläche
5 Anschlagfläche
6 Anlagering
7 Rastfedern
8 Rastnasen
9 Nut
10 Dichtungsring
11 Innenfläche
12 Schraubteil
13 Gleitscheibe
14 Stelle
15 Spannring
16 Schlitz
17 Keilfläche
18 Verankerungsrippen
19 Flanschring
20 Innengewinde
21 Außenfläche
22 Dichtung
23 Anlagefläche

### Patentansprüche

1. Kupplungsvorrichtung (1) für das druckdichte und lösbare Verbinden von Rohren aus nachgiebigem Werkstoff, insbesondere von Kunststoffrohren, wobei in einem Grundkörper (2) eine Aufnahme für ein Rohrende (3) vorgesehen ist, das Rohrende (3) benachbart der äußeren Stirnfläche (4) mit Abstand von einer Anlagefläche umschlossen ist, an der sich ein an dem Außenmantel des Rohrendes (3) anliegender Dichtungsring (10) abstützt, dem an der der Anlagefläche abgewandten Seite eine Gleitscheibe (13) und ein geschlitzter, am Außenmantel des Rohrendes (3) sich abstützender Spannring (15) zugeordnet sind, wobei der Spannring (15) außen mit einer Keilfläche versehen ist, die sich an einer konischen Innenfläche eines ringförmigen, in den Innenraum des Grundkörpers (2) einschraubbaren Schraubteiles (12) abstützt, wobei sich der Innenkonus des Schraubteiles (12) vom Einschraubende bis zu dem der äußeren Stirnfläche (4) des Rohrendes zugewandten Ende hin erweitert, dadurch gekennzeichnet, daß die Anlagefläche Teil eines das Rohrende umschließenden Ringkörpers (6) ist und daß außerdem der Dichtungsring (10) außen an der konischen Innenfläche des Schraubteiles (12) anliegt und das Schraubteil (12) an dem in den Grundkörper (2) eingeführten Ende eine äußere zylindrische Führungsfläche (21) aufweist, in deren Bereich eine nach außen geöffnete Aufnahmenut für eine sich an der zylindrischen Innenfläche des Grundkörpers (2) abstützende Dichtung (22) vorgesehen ist.

2. Kupplungsvorrichtung nach Anspruch 1, dadurch gekennzeichnet, daß der Anlagering (6) an seiner der Anlagefläche gegenüberliegenden Seite mit Rastfedern (7) ausgerüstet ist, deren Rastnasen (8) in eine nach innen geöffnete Nut des Grundkörpers (2) eingreifen.

3. Kupplungsvorrichtung nach Anspruch 2, dadurch gekennzeichnet, daß der Anlagering (6) aus Kunststoff gefertigt ist.

4. Kupplungsvorrichtung, insbesondere nach Anspruch 1, dadurch gekennzeichnet, daß die Gleitscheibe (13) mit dem geschlitzten Spannring (15) an einer Stelle (14) verbunden ist.

5. Kupplungsvorrichtung nach Anspruch 4, dadurch gekennzeichnet, daß die Gleitscheibe (13) und der Spannring (15) einstückig aus Kunststoff gefertigt sind.

### Claims

1. Coupling means (1) for releasably connecting and sealing pipes made of resilient materials, such as plastics in particular, and conveying a pressurized medium, said coupling means comprising a main body (2) with a retainment therein for the end of a pipe (3), the latter being enclosed in the vicinity of its edge (4) by a spaced bearing surface supporting a seal ring (10) that is in contact with the shell of said pipe end (3), further provided with a sliding rim (13) on the side facing away from said bearing surface and with a slotted clamping ring (15) adjoining said shell of said pipe end (3), said clamping ring (15) having an external wedge-shaped portion bearing upon a conical inside area of an annular screw member (12) that can be screwed into the hollow of said main body (2), the inside cone of said screw member (12) being flared from its insertion end towards its end facing said edge (4) of said pipe end (3), characterized in that said bearing surface is part of a ring member (6) enclosing said pipe end (3), the outside of said seal ring (10) adjoining the conical inside area of said screw member (12), and in that said screw member (12) has, at its end inserted in said main body (2), an external cylindrical guide section (21) in the range of which there is an open slot provided to accomodate a seal ring (22) resting upon the cylindrical inside area of said main body (2).

2. Coupling means as claimed in Claim 1 above, characterized in that said ring member (6) is furnished with catch springs (7) on its side opposite to its contact surface, the lugs (8) of said catch springs engaging an open slot in said main body (2).

3. Coupling means as claimed in Claim 2 above, characterized in that said ring member (6) is made of plastic.

4. Coupling means as claimed in Claim 1 in particular, characterized in that said sliding rim (13) is integrally connected with said slotted clamping ring (15) in one area.

5. Coupling means as claimed in Claim 4 above, characterized in that said sliding rim (13) and said clamping ring (15) are made of plastic in one piece.

**Revendications**

1. Raccord (1) pour la liaison étanche à la pression et démontable de tuyaux en matériau flexible, particulièrement de tuyaux en matière plastique; dans un corps de base (2) est prévu un logement pour une extrémité de tuyau (3); l'extrémité de tuyau (3) à proximité de la face frontale extérieure (4) est entourée, avec un intervalle, par une surface d'appui contre laquelle s'applique un joint d'étanchéité (10) en contact avec la face extérieure de l'extrémité du tuyau (3) et auquel correspondent, du côté faisant face à la surface d'appui, une rondelle lisse (13) et une bague de serrage fendue (15) en appui sur la surface extérieure de l'extrémité du tuyau (3); la bague de serrage (15) est pourvue extérieurement d'une portée conique qui prend appui contre une surface conique intérieure d'une pièce filetée annulaire (12) se vissant à l'intérieur du corps de base (2); le cône intérieur de la pièce filetée (12) s'élargit de l'extrémité à visser jusqu'à la face frontale extérieure (4) de l'extrémité du tuyau, ce qui se caractérise par le fait qu'en outre le joint d'étanchéité (10) s'applique extérieurement contre la surface intérieure conique de la pièce filetée (12), et que la pièce filetée (12) présente, à l'extrémité introduite dans le corps de base (2), une surface de guidage extérieure cylindrique (21) dans la zone de laquelle est prévue une gorge extérieure, destinée à recevoir un joint (22) en appui contre la surface cylindrique intérieure du corps de base (2).

2. Raccord selon revendication 1, caractérisé par le fait que la bague de butée (6) est pourvue, sur son côté faisant face à la surface d'appui, de ressorts à cran d'arrêt (7) dont les taquets (8) s'encliquettent dans une gorge intérieure du corps de base (2).

3. Raccord selon revendication 2, caractérisé par le fait que la bague de butée (6) est fabriquée en matière synthétique.

4. Raccord, particulièrement selon revendication 1, caractérisé par le fait que la rondelle lisse (13) est reliée en un point (14), à la bague de serrage fendue (15).

5. Raccord selon revendication 4, caractérisé par le fait que la rondelle lisse (13) et la bague de serrage (15) sont fabriquées d'une seule pièce, en matière synthétique.

*Fig. 1*

Fig. 2